Europäisches Patentamt

European Patent Office

Office européen des brevets

(11) Veröffentlichungsnummer: **0 1 1 1 763**
**B1**

(12) **EUROPÄISCHE PATENTSCHRIFT**

(45) Veröffentlichungstag der Patentschrift:
**20.11.86**

(21) Anmeldenummer: **83111535.7**

(22) Anmeldetag: **18.11.83**

(51) Int. Cl.⁴: **E 04 F  15/08,** E 04 F  15/18,
F 24 D  3/00, F 24 D  5/10

(54) **Fliese, Fliesenbaustein.**

(30) Priorität: **20.11.82  DE 3242942**
**20.11.82  DE 8232564 U**

(43) Veröffentlichungstag der Anmeldung:
**27.06.84 Patentblatt 84/26**

(45) Bekanntmachung des Hinweises auf die Patenterteilung:
**20.11.86 Patentblatt 86/47**

(84) Benannte Vertragsstaaten:
**AT BE CH DE FR GB IT LI LU NL SE**

(56) Entgegenhaltungen:
**DE - A - 2 338 379**
**DE - A - 2 809 086**
**DE - A - 2 939 635**
**DE - A - 3 014 390**
**DE - C - 810 314**
**DE - U - 8 029 453**
**GB - A - 909 131**

(73) Patentinhaber: **Groll, Hartmut, Rettigstrasse 4,**
**D-7570 Baden-Baden (DE)**

(72) Erfinder: **Groll, Hartmut, Rettigstrasse 4,**
**D-7570 Baden-Baden (DE)**

(74) Vertreter: **Patentanwälte Dipl.-Ing. E. Eisele Dr.-Ing. H.**
**Otten, Seestrasse 42, D-7980 Ravensburg (DE)**

## Beschreibung

Die Erfindung betrifft eine Fliese, als Wand- oder Bodenplatte, vorzugsweise mit einer ebenen Oberfläche, mit einem mit der Oberfläche verbundenen, von Kanälen durchzogenen Unterbau und mit nut- und federartigen Leisten im Seitenbereich der Wand- bzw. Bodenplatte.

Aus der DE-A-2338379 ist eine Fliese gemäss der Gattung des Hauptanspruchs bekannt geworden, die den Nachteil hat, dass die Kanäle für Warmwasserrohre bzw. Heizkabel infolge ihrer geschlossenen Form schlecht zugänglich sind, so dass die Verlegung in der Praxis praktisch nicht durchführbar ist. Bei dieser bekannten Fliese müssen die Heizrohre bzw. Heizelemente jeweils von Fliese zu Fliese neu gesteckt werden, was eine grosse Gefahr der Undichtigkeit mit sich bringt. Die Heizrohre müssen demnach in den bereits verlegten Fliesenbelag mühsam und umständlich eingebracht werden.

Der Erfindung liegt die Aufgabe zugrunde, die vorbeschriebenen Nachteile der bekannten Fliese bzw. Wand- und Bodenplatte zu vermeiden und insbesondere einen Fliesenbelag vorzuschlagen, der einfach und schnell zu verlegen und ausserdem objektiv warm ist.

Diese Aufgabe wird durch den kennzeichnenden Teil des Anspruchs 1 gelöst.

Die erfindungsgemässe Fliese hat gegenüber den bekannten Bodenplatten den Vorteil, dass hiermit erstmals eine praxisgerechte Lösung geschaffen wurde. Durch die präzis herzustellende Nut- und Federverbindung an der erfindungsgemässen Fliese wird ein Wand- oder Bodenbelag mit Präzision und Dichtigkeit geschaffen. Als besonders vorteilhaft sind weiterhin die Durchbrüche in Längs- und Querrichtung der Fliese anzusehen, die als genau fluchtende Kanäle hergestellt sind. Dies gilt insbesondere bei der Verlegung der Fliese im Verband, wobei Querbohrungen der einen Fliese mit Längsbohrungen der benachbarten Fliese fluchten müssen. Erst durch dieses aufeinander abgestimmte System lassen sich bekannte Verlegungsmuster im Verband herstellen, auf die in der Praxis nicht verzichtet werden kann und die einen wirtschaftlichen Erfolg garantieren.

Erfindungswesentlich sind weiterhin die ausbrechbaren Kanäle, die zunächst eine möglichst kleine Flächenbelastung des Untergrunds bewirken. Damit ist die Fliese auch auf mehr oder weniger weichem Untergrund bzw. Isolierung verlegbar. Die die Flächenbelastung erhöhenden Ansprüche werden deshalb nur dort angebracht, wo sie unbedingt nötig sind.

Nicht mehr wie bisher finden Fliesenplatten Anwendung, die in ein Dünnbett oder in ein Mörtelbett verlegt werden und so mit dem Untergrund fest verbunden sind, sondern quaderförmige Fliesenbausteine, bestehend aus der als Fliese ausgebildeten Oberseite und dem mit ihr verbundenen Unterbau, die nebeneinander auf einem ebenen Belag ausgelegt werden können und sich bereits durch ihr Gewicht und die gegenseitige Reibung, insbesondere durch die Nut- und Federverbindung, in dieser Lage halten. Der dabei vorgesehene Abstand (Fuge) zwischen den Fliesen kann mit einem handelsüblichen Kleber mittels passender Zahnkelle bestrichen werden, so dass sich die Fliesen fest verbinden. Dadurch entsteht ein Belag wie aus einem Guss, der alle vertikalen und horizontalen Kräfte aufnimmt. Zur Verlegung sind also keine schwierigen Manipulationen notwendig, die nur von Fachkräften ausgeführt werden können, sondern die Fliesenbausteine nach der Erfindung können durchaus auch von ungelernten Kräften verlegt werden. Die Verlegung kann sich auch nach dem gestalterischen Verlegemuster richten, da die längs- und querverlaufenden Kanäle auch ein Verdrehen der Fliesenbausteine um 90 Grad sowie die Kombination unterschiedlicher Fliesengrössen miteinander zulassen, beispielsweise ein Fliesenverband, bestehend aus Fliesenbausteinen der Grösse 12,5×25 cm und 25× 25 cm oder anderen Grössen. Der Entfall eines Estrichs bzw. eines Mörtelbetts wirkt ausserdem kostensparend.

Zum Verlegen ist ausserdem lediglich ein ebener Untergrund notwendig, der aus nahezu beliebigen Materialien bestehen kann. So können derartige Fliesenbausteine auch auf einem gut isolierenden Untergrund, beispielsweise Spanplatten, aufgelegt werden, wodurch bereits ein Wärmedurchgang zum Untergrund unterbunden ist. Durch die grosse Aufstandsfläche des erfindungsgemässen Fliesenbausteins und die damit verbundene geringe spezifische Druckbelastung des Untergrundes ist es auch möglich, sie auf verhältnismässig weichen Isoliermatten aufzulegen. Eine Isolierung nach unten wird jedoch bereits durch die im Unterbau der Fliesen befindlichen Kanäle und die darin enthaltene Luft erreicht. Hierbei ist ausserdem ein für eine effiziente Niedertemperaturheizung so wichtiger Wärmeausgleich zwischen nebeneinander verlegten Fliesenbausteinen durch eine interne Luftzirkulation zu beobachten, die für einen schnellen horizontalen Wärmetransport flächig in allen Richtungen innerhalb des Belages sorgt, so dass in kürzester Frist der gesamte mit diesen Fliesenbausteinen erstellte Belag gleichmässig erwärmt ist. Diese Luftzirkulation kann auch direkt für eine Warmluftheizung ausgenutzt werden, wobei warme Luft durch diese Kanäle hindurchgeführt wird, die nicht nur die Fliesenbausteine nach der Erfindung aufwärmt, sondern damit auch den Raum, in dem diese Bausteine verlegt sind. Die gleichmässige Durchwärmung wird insbesondere durch die kreuzweise verlaufenden Kanäle bewirkt, wodurch sich die warme Luft innerhalb der Fliesen über die gesamte Fläche des Belages ausbreiten kann und damit eine gleichmässige Durchwärmung bewirkt. Die warme Luft wird durch einen in den Fliesenfussboden an einer Wandseite integrierten Heizkörper erzeugt. Die dort durch Schlitze in den Fliesen austretende Warmluft lässt infolge eines schwachen Unterdrucks Luft aus dem Tunnelsystem des insgesamt weitgehend luftdichten Fliesenbelages zum Heizelement hin nachströmen, wodurch wiederum bereits erwärmte Raumluft durch die Schlitze der wandseitig dem Heizkörper gegenüber liegenden Fliesenreihe angesaugt wird. Auch bei dieser automatischen Durchströmung des aus den erfindungsgemässen Fliesenbausteinen erstellten Belags erfolgt eine Durchströmung und Aufwärmung des gesamten Belages durch das kreuzweise Kanalsystem der Fliesen, wobei die wandseitigen Öffnungen der Kanäle an den Seitenwänden in diesem Fall selbstverständlich geschlossen sein müssen. Darüber hinaus kann Warmluft direkt durch ein an einer Seite eingeführtes Rohrsystem unter den Fussboden eingeblasen werden, die nach Durchströmen des Kanalsystems jenseits den Belag wieder verlässt, oder es kann warme Luft durch ein weiteres, eingeführtes Rohrsystem angesaugt werden. In allen Fällen kann das Eindringen von Staub durch feine Filter in den Schlitzen der Fliesen verhindert werden.

Ausserdem können selbstverständlich in den Kanälen zum Zwecke der Fussbodenheizung auch Heizungsrohre lose verlegt werden. Dies ist im Gegensatz zu den bekannten keramischen Fliesen unschwer möglich, da der Fliesenbaustein nach der Erfindung längs- und querverlaufende Kanäle aufweist und die Rohrführungs-Kanäle in beiden Richtungen, also auch bei einem Fliesenverband, jeweils miteinander korrespondieren. Der besondere Vorteil bei dieser Verlegung der Heizungsrohre ist, dass die Rohre nicht einbetoniert sind, im Reparaturfall also unschwer erreicht werden können. Da diese Heizrohre nicht agressiven Medien (Zementestrich) ausgesetzt sind, genügend Spielraum für wärmebedingte Ausdehnungen haben, können gut wärmeleitende und -strahlende Metallrohre verwendet werden, wobei die Wärme von diesen Heizungsrohren direkt auf die Fliese abstrahlt. Es muss also nicht, wie bei den bisherigen Fussbodenheizungen, erst der Estrich und dann erst der Oberbelag erwärmt werden, bevor sich die Wärme im Raum bemerkbar macht.

Auch kann eine direkte Wärmeübertragung von den Heizrohren auf die Fliesenbausteine dadurch herbeigeführt werden, dass in die nach unten offenen Rohrführungskanäle elastische Metallgewebe- oder Metallwollebänder eingelegt bzw. eingeklebt werden, die sich beim Überstülpen der Fliesenbausteine über die Heizungsrohre zusammendrücken und so eine direkte Wärmeübertragung von der Oberfläche der Heizungsrohre zu der Innenwandung dieser Kanäle bzw. zum Fliesenbaustein ermöglichen. Gleiches kann selbstverständlich auch dadurch erreicht werden, dass die Heizungsrohre mit einer entsprechend nachgiebigen, gut wärmeleitenden Ummantelung versehen werden, die sich in die nach unten offenen Kanäle der erfindungsgemässen Fliesenbausteine eindrükken lässt. Eine zusätzliche Isolierung und Wärmerückstrahlung nach oben kann durch einen Isolier- oder Metallfoliestreifen unterhalb der Heizungsrohre erreicht werden.

Der Einbau solcher direkter Wärmebrücken zwischen Heizrohr und Fliesen ist dann angebracht, wenn eine sofortige Erwärmung des Fliesenbelages oder eine auf eine bestimmte Teilfläche des Fliesenbelages begrenzte stärkere Erwärmung als in den übrigen Flächen angestrebt wird.

Dies kann durchaus gewünscht sein, zumal eine grossflächige Niedertemperaturheizung zwar einen Raum insgesamt angenehm temperiert, aber die Schaffung einer richtigen «warmen Ecke» innerhalb des gleichen Systems technisch doch nicht zulässt.

Auch ist hier besonders an den Kachelofeneffekt gedacht, den eine mittels der erfindungsgemässen Fliesenbausteine erwärmte Wand dann vermittelt, wenn die Fliesen der üblicherweise kleineren Kachelofenfläche stärker angewärmt werden. Dies kann auch elektrisch oder auch elektrisch in Verbindung mit einem separaten Warmwasserkreislauf erreicht werden.

Auf diese Weise kann eine sofort ansprechende, also schnell wirksame Fliesen-«Kachelofen»-Wandheizung mit den erfindungsgemässen Fliesenbausteinen realisiert werden, die aufgrund der geringen Bautiefe und der Flexibilität des Systems in jeden Raum passt und überall nachträglich eingebaut werden kann.

Anstelle von Heizrohren können auch Kühlflüssigkeit führende Rohre eingefügt werden, beispielsweise zur Raumkühlung oder zum Aufbau einer Kunsteisbahn. Da die Kunsteisbahnflächen unbedingt homogen sein müssen, entstehen bei den grossen Dimensionen dieser Flächen ganz ausserordentliche Spannungen in den Estrichen, die nur durch massive Eisenarmierungen aufgefangen werden können. So erfordert beispielsweise eine Kunsteisbahn von 30/60 m ca. 500 Tonnen Eisen. Der erfindungsgemässe Fliesenbaustein löst auch dieses Problem zu einem Bruchteil der Kosten.

Die obigen Ausführungen zeigen, dass die Verlegearbeiten für eine derart gestaltete Fussbodenheizung sehr einfach sind, also nicht die hohe Präzision wie bei bekannten Systemen erfordern und somit fehlerlos auch von ungelernten Kräften ausgeführt werden können. Dadurch ist eine Verlegung auch mit geringen Kosten verbunden, zumal auch weitere Zusatzarbeiten entfallen. Ausserdem ist es selbstverständlich möglich, in diesen offenen oder geschlossenen Kanälen auch Stromversorgungsleitungen oder Schwachstromleitungen absolut geschützt zu führen, so dass der grosse Aufwand zum Verlegen elektrischer Leitungen unter Putz zum grossen Teil entfallen kann. Gleiches gilt auch für Wasser- und Gasleitungen.

Bisher war es nicht möglich, keramische Fliesen auf schwingenden oder sich bewegenden Böden zu verlegen, ohne dass umfangreiche Stabilisierungsmassnahmen, z.B. durch starke, eisenarmierte Estriche, vorgenommen wurden, da Spannungen oder Bewegungen im Unterboden zu Rissen und damit zur Beschädigung des Fliesenbelages führen. Aus diesem Grund konnten viele Räume, z.B. auch in Altbauten, nicht wirtschaftlich mit Fliesen ausgelegt werden, wenn Zwischendecken in Holz ausgeführt sind oder es sich überhaupt um Holz(leimbinder-)Konstruktionen handelt. Die erfindungsgemässe Fliese erlaubt erstmals, dass ein homogener Fliesenbelag direkt auf einen federnden (Holz-)Untergrund, sei es auf dem Fussboden oder an der Wand, aufgebracht wird. Werden die Fliesenbausteine beispielsweise mittels eines dauerelastischen Klebers verbunden, so ist der Fliesenbelag in der Lage, Spannungen oder Bewegungen des Untergrundes in sich selbst auszugleichen, ohne dabei an Stabilität einzubüssen oder gar Schäden aufzuzeigen. Klebeverbindungen gewährleisten im übrigen weitaus höhere Wasser- und Luftundurchlässigkeit aufgrund der grossen, verzahnten Klebeflächen, als dies Fugen herkömmlicher Fliesen vermögen. Mithin sind wasserdichte Fliesenbeläge mit dem erfindungsgemässen Fliesenbaustein viel einfacher herzustellen als mit herkömmlichen Fliesen.

An den Seitenwänden des Unterbaus der erfindungsgemässen Fliesenbausteine können neben der Nut-und-Feder-Ausführung auch oder statt deren Öffnungen oder Schlitze zum Einstecken von elastischen Verbindungsmitteln vorgesehen sein. Derartige Verbindungsmittel können einfache Elastomerbolzen oder -platten sein, auch Gummiprofile, wodurch die Fliesen nicht starr miteinander bzw. mit dem Untergrund verbunden sind, sondern sich geringfügig gegeneinander verschieben und damit Untergrund-Erschütterungen oder -verwerfungen folgen können.

Des weiteren können auch elastische Sockelstücke zum Aufsetzen der Unterbauten bzw. der Fliesenbausteine vorgesehen sein, wobei diese Sockelstücke auch in nach unten offene Kanäle oder seitliche Führungsschlitze eingreifen können, um die Fliesen zueinander zu fixieren. Dadurch wird die Lagerung der Fliesenbausteine äusserst elastisch, und es wird ausserdem ein wärme- und schallisolierendes Luftpolster zwischen den Fliesenbausteinen und dem Untergrund geschaffen.

Ein derartiger elastisch nachgebender Bodenbelag eignet sich auch sehr gut für Sportböden. Selbstverständlich kann der Fliesenbelag auch so ausgeführt sein, dass Wasser durch ihn hindurch abgeleitet werden kann. Hierzu können auch die Verbindungsfugen zwischen den einzelnen Fliesen mit Durchbrüchen gestaltet werden, die Fliesen auf Abstand durch ein flexibles Profil gehalten oder mit Schlitzen, die von unten nach oben führen, ausgeführt sein.

In Schwimmbädern kann auf diese Weise ein wasserfreier, rutschfester Fliesenboden hergestellt werden, wobei die Fliesenoberseite zu diesem Zweck auch leicht gewölbt ausgebildet werden kann, um den Wasserabfluss zu beschleunigen. Auf die gleiche Weise kann ein stets trockener und auch nach starkem Regen sofort beispielbarer Tennisbelag hergestellt werden. Solche stets praktisch trockene Fliesenfussböden vermindern die Unfallgefahr und erhöhen die Benutzbarkeit. Gleichzeitig sind sie dauerhaft und sehr leicht zu pflegen.

Erfindungsgemässe Fliesenbausteine zur Verlegung an Wänden können sich von den vorbeschriebenen Fussbodenfliesen insofern unterscheiden, als sie in den Materialstärken schwächer ausgebildet sein können. Zur einfachen Aufbringung der Wandfliesen sind vorzugsweise an deren Auflageflächen stirnseitige Aussparungen, z.B. halbkreisförmig, vorgesehen, womit sie in passende Halterungen wie Nägel, Schrauben, Haken, Klemmen stabil und unverrückbar eingehängt werden können. Die Anbringung an der Wand vereinfacht sich, wenn der Befestigungsuntergrund Holz ist. Im übrigen kann ein solcher Wandfliesenbelag, der ja auch fugenlos lose verlegt werden kann, nach Lösen der obersten Arretierungsreihe einfach wieder abgehängt werden. Die Fliesen sind einmal durch die Wandanker, zum andern durch die gegenseitige Verzahnung fixiert. Selbst ein nicht verklebter Wandbelag ist dabei weitgehend wasserdicht, da Wasser, das durch einen engen Fugenspalt durchdringen würde, aufgrund der Bauhöhe der Fliese kaum an die Rückwand gelangen, sondern an der Oberflächenrückseite der Fliese abrinnen würde.

Durch ihre Massgenauigkeit können die erfindungsgemässen Fliesenbausteine sehr eng, sozusagen fugenlos verlegt und verklebt werden. Da Fliesenfugen jedoch im allgemeinen ein gewünschtes, gestalterisches Element darstellen, können Aussparungen (Profile) für Zierfugen vorgesehen werden.

Die erfindungsgemässen Fliesenbausteine ermöglichen eine sehr einfache und wirksame Wandheizung. Dazu wird unten an der Wand eine Heizfliesenreihe angebracht, in der sich ein Heizelement, vorzugsweise ein Lamellenheizelement, befindet. Gegebenenfalls können auch zwei oder mehrere Reihen mit integrierten Heizelementen übereinander angeordnet sein. Lufteintrittsöffnungen in Bodennähe ermöglichen den Luftzuzug, diese erwärmt sich an den Heizelementen und steigt innerhalb des Kanalsystems der Fliesenbausteine auf. Die so erwärmten Wandfliesen strahlen die Wärme an den Raum ab. Derartige Wandheizungen sind äusserst platzsparend, wirksam und lassen eine individuelle, dekorative Gestaltung der Vorderfront zu. Sie können auch leicht nachträglich in jeden Raum angebracht werden und vermitteln etwa den Eindruck eines flachen Kachelofens.

Die Herstellung eines derartigen Fliesenbausteins ist zumindest hinsichtlich der nach unten offenen Kanäle verhältnismässig einfach. Um die vorteilhafte grosse Aufstandsfläche der Fliesenbausteine nach der Erfindung zu erhalten, können die nach unten offenen Kanäle im Anlieferungszustand durch Stege auch geschlossen und lediglich durch Einkerbungen markiert sein, so dass diese Kanäle erst je nach Bedarf beim Verlegen der Fliesenbausteine ausgebrochen werden. Nicht benötigte Kanäle bleiben geschlossen, so dass sich stets eine sehr grosse Aufstandsfläche ergibt. Aber auch die Herstellung der geschlossenen Kanäle, die sich als zweckmässig für die Warmluftführung erwiesen haben, stösst nicht auf Schwierigkeiten, da das Verfahren zu ihrer Herstellung aus der Hohlziegelproduktion bekannt ist. Die quer verlaufenden Kanäle können nach der Trocknung der Fliesen unschwer gebohrt bzw. ausgefräst werden, zusammen mit einer Flankenprofilbearbeitung und stirnseitigen Profilbearbeitung des Fliesenbausteins. Möglich ist auch das Einbringen dieser quer verlaufenden Kanäle durch einen in den Fliesenbaustein von seiner Unterseite in den Unterbau eingreifenden Schneidedraht, der entsprechend kreisförmig geführt wird und den benötigten Hohlraum ausschneidet. Insgesamt ist damit der Fliesenbaustein nach der Erfindung sehr kostengünstig herzustellen, gleichgültig, ob der Unterbau separat hergestellt und sodann mit der Fliese verbunden wird oder ob Fliese und Unterbau einstückig sind. So kann beispielsweise sowohl die Fliese wie auch der Unterbau aus Steingzeug, allgemein aus keramischem oder hydraulisch abbindenden Material, in diesem Falle dann einstückig sein. Es kann aber auch eine Steinzeugfliese auf einem beispielsweise aus Kunststoff bestehenden Unterbau aufgeklebt werden. Auf jeden Fall empfiehlt es sich, die Kanäle etwa gleich hoch auszuführen und in etwa gleichem Abstand von der Fliesenoberfläche anzuordnen, um einmal die Fertigung zu erleichtern und zum andern auch etwa gleiche Materialdichten zu erreichen.

Die vorbeschriebene, in hohem Masse rationalisierbare Herstellung der Fliesenbausteine machen diese zu einem preisgünstigen, qualitativ hochwertigen, dauerhaften und hinsichtlich der Energieeinsparung überaus wirksamen Bauelement; ihre vielseitigen Anwendungsbereiche und ihre denkbar einfache Handhabung machen sie praktisch für jeden Bauherrn interessant. Besonders dem Bauherrn, der aus Kostengründen hohe Eigenleistungen erbringen muss, kommt die einfache, problemlose Handhabung entgegen. Somit finden die erfindungsgemässen Fliesenbausteine ihren Markt im Wohnungsbau, im Büro-, Geschäfts- und Fabrikbau, im kommunalen Bauwesen wie Schulen, Krankenhäusern, Schwimmbädern, Sportbauten und -plätzen, Kirchen, in behördlichen Verwaltungsbauten usw.

Gleichzeitig optimiert sie Niedertemperaturheizungen schlechthin im Höchstmass und trägt so auch zur Verminderung der Umweltbelastung durch die Verringerung der notwendigen Heiztätigkeit bei.

Schliesslich sei noch auf einen wichtigen baubiologischen Aspekt hingewiesen: ein Tonfussboden ist erwiesenermassen gesünder als ein Betonfussboden.

Auf den Zeichnungen sind Ausführungsbeispiele des Fliesenbausteins nach der Erfindung schematisch dargestellt, und zwar zeigen:

Fig. 1 die Vorderseite zweier nebeneinander verlegter Fliesenbausteine mit nach unten offenen Rohrkanälen;

Fig. 2 die Vorderansicht eines Fliesenbausteins nach Fig. 1 mit nach unten geschlossenem Rohrkanal;

Fig. 3 die Vorderansicht eines speziellen Fliesenbausteins zur Aufnahme eines Lamellen-Heizelements;

Fig. 4 die Vorderansicht eines grösseren Fliesenbausteins mit offenem und geschlossenem Tunnel- bzw. Kanalsystem;

Fig. 5 die Seitenansicht der Fliesenbausteine nach Fig. 1–4;

Fig. 6 die Unteransicht eines quadratischen Fliesenbausteins mit offenen Rohrkanälen;

Fig. 7 Verbindungsmöglichkeit mit Auflagesockel;

Fig. 8 wärmeleitenden Füllkörper zwischen Heizrohr und Fliesenunterseite.

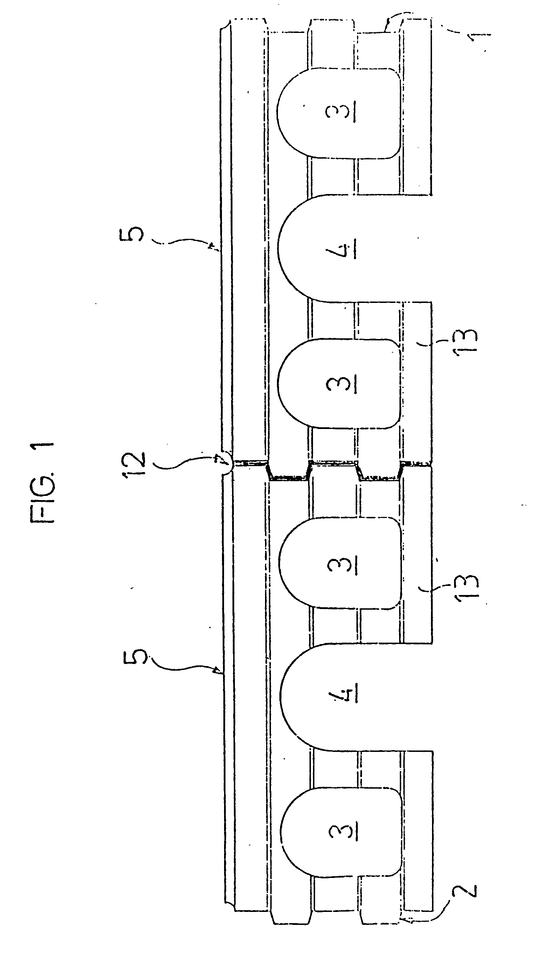

Der Fliesenbaustein 13 nach Fig. 1 und 15 weist eine quaderförmige Gestalt auf, mit etwa den Abmessungen 125×250×60 mm. Selbstverständlich sind auch andere Abmessungen möglich. Die Seitenwände dieses Fliesenbausteins 13 sind mit Nuten 1 und Leisten (Federn) 2 versehen, um eine nut- und federartige Verbindung zwischen den einzelnen Fliesenbausteinen 13 herstellen zu können. Die beiden Fliesenbausteine nach Fig. 1 sind über eine aufgetragene Kleberschicht 12 miteinander verklebt. An der Oberseite der Fliesenränder geht diese Kleberschicht in ein dekoratives Fugenprofil über.

Der Kleber dieser Kleberschicht kann auch dauerelastisch sein, um etwaige Untergrundspannungen oder -bewegungen aufnehmen zu können. Auch ermöglicht eine solche Klebeverbindung im Falle einer Reparatur die einfache Demontage des aus den Fliesenbausteinen 13 gebildeten Belages, wie auch dessen anschliessende Remontage.

Im Innern des Unterbaus der Fliesenbausteine 13 sind geschlossene (3) und nach unten offene Kanäle 4 vorgesehen. Die Kanäle 4 kreuzen sich, so dass sie miteinander in Verbindung stehen. Die Kanäle 4 können zur Verlegung von Leitungsrohren Verwendung finden; die geschlossenen Kanäle dienen insbesondere der Luftführung bzw. dem Luftausgleich und der Gewichtsminderung.

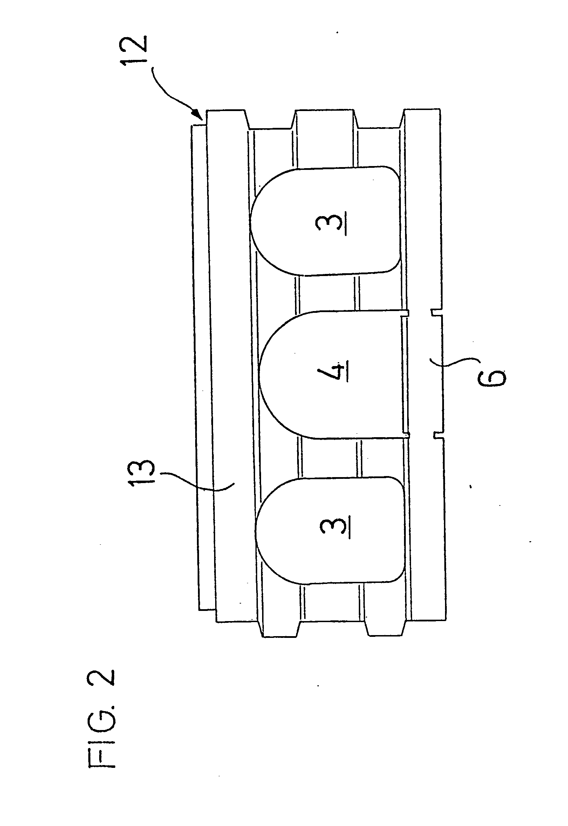

Fig. 2 zeigt die Vorderansicht eines Fliesenbausteins 13 nach Fig. 1 mit einem durch einen seitlich angekerbten Steg 6 geschlossenen Rohrkanal 4.

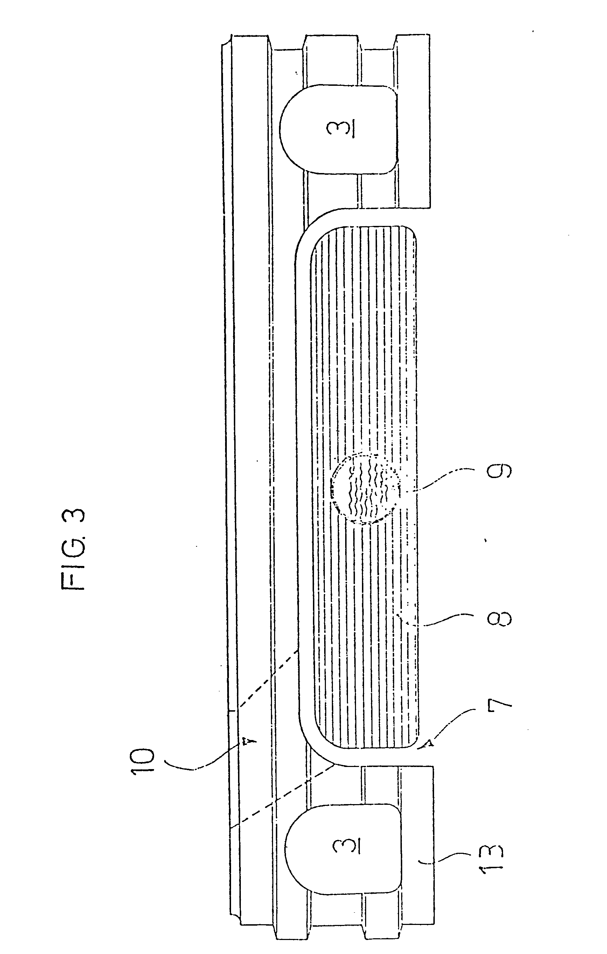

Fig. 3 zeigt einen Spezial-Fliesenbaustein, der einen in einer Richtung verlaufenden breiten Kanal 7 aufweist zur Aufnahme eines mit Lamellen 8 versehenen Heizungsrohres 9. Von dem Kanal 7 können Schlitze 10 nach oben führen, um Warmluft austreten zu lassen. Selbstverständlich wird durch die in den Kanal 7 verlegte Heizung auch sehr schnell der Fliesenbaustein erwärmt, so dass der gesamte Fliesenbaustein nach kurzer Zeit die Wärme an den Raum abgibt.

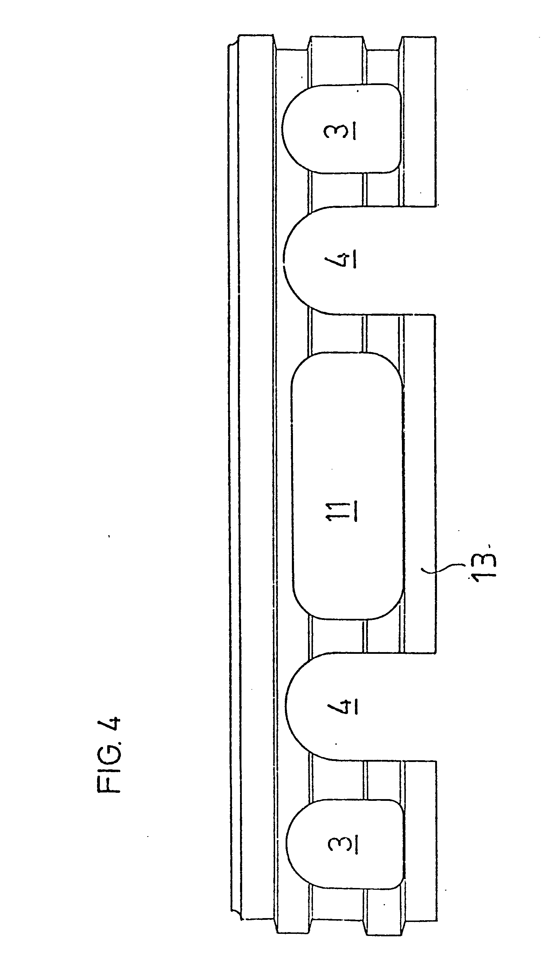

Fig. 4 zeigt einen grösseren, vorzugsweise quadratischen Fliesenbaustein. Der breite, nach unten geschlossene mittlere Kanal 11 erleichtert die Warmluftführung, die aber auch durch die Kanäle 3 und 4 gleitet, wodurch eine schnelle Erwärmung des Fliesenbausteins erreicht wird. Mit den Abmessungen von etwa 250×250×60 mm harmoniert dieser Fliesenbaustein mit den Fliesenbausteinen nach Fig. 1 und ermöglicht daher die Verlegung eines abwechslungsreichen Fliesenverbandes.

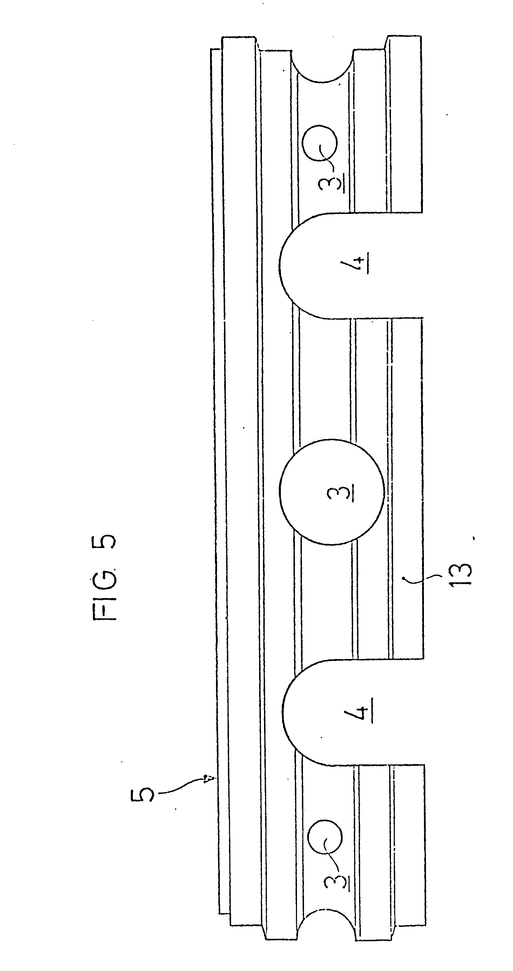

Fig. 5 zeigt die Seitenansicht der Fliesenbausteine nach den Fig. 1, 3 und 4. Hier sind auch Verbindungsöffnungen 6 ersichtlich, in die vorzugsweise elastische Bolzen zum sicheren Verbinden zweier benachbarter Fliesenbausteine 13 eingesteckt werden können. Diese Öffnungen können jedoch auch zur Luftführung dienen.

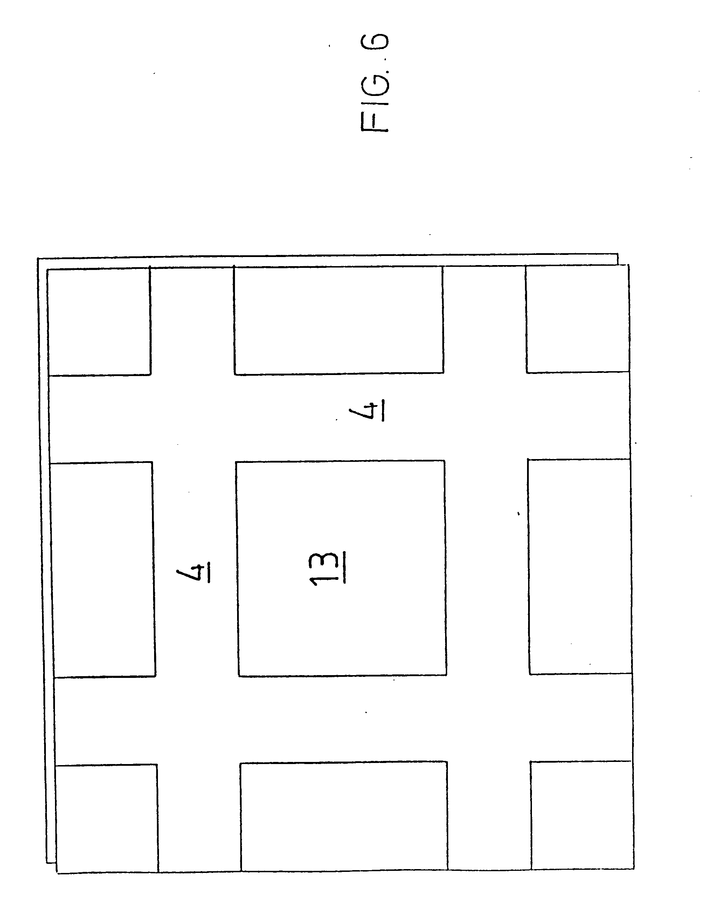

Fig. 6 zeigt die Unterseite eines quadratischen Fliesenbausteins nach der Erfindung. Aus dieser Untersicht ist die Anordnung der nach unten offenen Kanäle 4 ersichtlich.

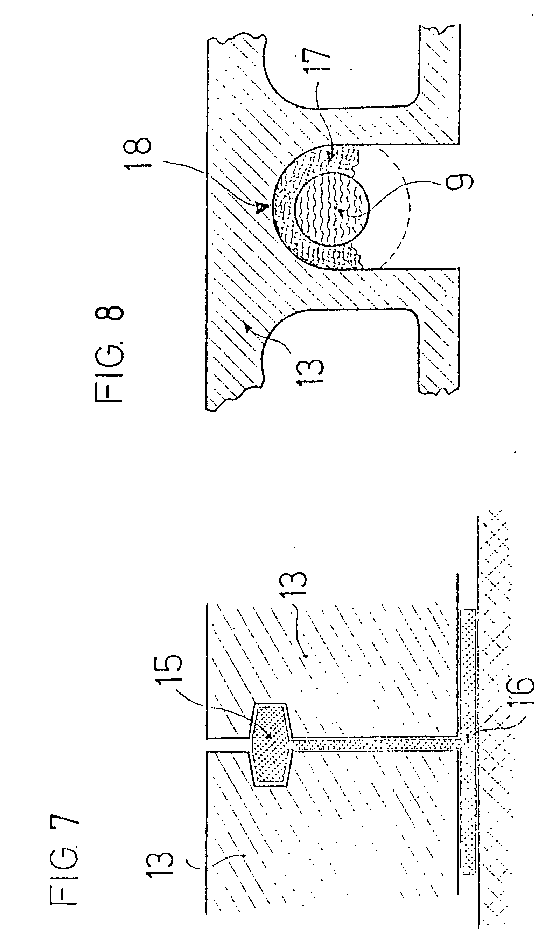

Eine nicht unter Schutz gestellte Möglichkeit der Vebindung zweier benachbarter Fliesenbausteine 13 kann über ein in Fig. 7 mit 15 dargestelltes Gummiprofil od. dgl. erfolgen, das in seitlichen Nuten eingelassen ist. Dieses Gummiprofil 15 kann so breit sein, dass sich ein Freiraum zwischen den benachbarten Fliesenbausteinen ergibt, durch den Wasser abfliessen oder Wärme aufsteigen kann. Ist das Gummiprofil 15 schmaler, so ist das unmittelbare Aneinanderdrücken der Fliesenbausteine möglich. Eine weitere Verbindungsmöglichkeit zwischen den Fliesenbausteinen wird dadurch erzielt, dass an den Eckpunkten der Fliesenbausteine, den Fugenkreuzen, nicht näher dargestellte Kreuz-Verbindungsplatten eingefügt sind.

Fig. 7 zeigt weiterhin eine ebenfalls nicht unter Schutz gestellte Verbindungsmöglichkeit mit kombinierter Sockelfläche 16 zum Auflegen der jeweiligen Fliesenecken. Sind diese Sockelflächen 16 aus elastischem Material, z.B. Gummi, hergestellt, so werden die Fliesen 13 dadurch berührungsfrei elastisch gelagert und bilden dennoch einen stabilen Verbund. Da Wasser durch die Fugen sofort abfliessen kann, der Belag selbst Belastungen abfedert, empfiehlt sich ein derartiger Fliesen-Fussboden besonders als staubfreier, trockener Tennisboden und für weitere, bereits beschriebene Anwendungsbereiche.

Fig. 8 zeigt einen zwischen Heizrohr 9 und Fliese 13 eingepressten, wärmeleitenden Füllkörper 17 zur direkten Wärmeübertragung vom Heizrohr 9 auf die Fliesenunterseite 18. Dieser Füllkörper kann als strumpf- bzw. rohrähnliches Geflecht ausgeführt sein und das Heizrohr ganz umschliessen, oder als weiches, biegsames Band. In beiden Fällen soll die Stärke des Füllkörpers so bemessen sein, dass er sich eng an Rohr und Fliesenunterseite 18 anschmiegt.

Die Oberfläche 5 der Fliesenbausteine 13 kann eben oder ballig, glatt oder profiliert und mit oder ohne Glasurbelag ausgeführt sein.

**Patentansprüche**

1. Fliese, als Wand- oder Bodenfliese, vorzugsweise mit einer ebenen Oberfläche, mit einem mit der Oberfläche verbundenen, von Kanälen durchzogenen Unterbau und mit nut- und federartigen Leisten im Seitenbereich der Wand- bzw. Bodenplatte, dadurch gekennzeichnet, dass alle vier Seitenwände des Unterbaus mit aufeinander angepassten nut- und federartige Leisten (1, 2) versehen sind und dass im Unterbau nach unten, im Anlieferungszustand zunächst geschlossene und mittels Sollbruchstellen aufbrechbare, parallel und quer zu den Seitenkanten der Fliese verlaufende Kanäle (3, 4, 7, 11) vorgesehen sind, wobei die Kanäle je nach Bedarf beim Verlegen der Fliese aufbrechbar sind.

2. Fliese nach Anspruch 1, dadurch gekennzeichnet, dass der Unterbau einstückig mit der Fliesenplatte verbunden ist.

3. Fliesenbaustein nach Anspruch 1 oder 2, dadurch gekennzeichnet, dass ein Teil der Kanäle (7) mit nach oben offenen Schlitzen (10) versehen ist und diese Schlitze (10), zumindest teilweise, mit Luft-Staubfilter verschlossen sind.

4. Fliesenbaustein nach Anspruch 1 oder 2, dadurch gekennzeichnet, dass die Kanäle (3, 4, 7, 11) etwa gleich hoch sind und in etwa gleichem Abstand von der Fliesenoberfläche (5) verlaufen.

5. Fliesenbaustein nach Anspruch 1 oder 2, dadurch gekennzeichnet, dass in die nach unten offenen Kanäle, zumindest teilweise, Metallwollstreifen eingelegt sind oder ein zusammenpressbarer Gewebeschlauch aus wärmeleitendem Material in den Kanälen (4), zumindest teilweise, vorgesehen ist, der sich eng in die Rohrführungskanäle (4) einfügt.

6. Fliesenbaustein nach Anspruch 1, dadurch gekennzeichnet, dass der Unterbau aus Steinzeug, keramischem, hydraulisch abbindendem Material oder aus Kunststoff ist.

7. Fliesenbaustein nach einem oder mehreren der vorhergehenden Ansprüche, dadurch gekennzeichnet, dass die Seitenwände des Unterbaus mit dauerelastischem Kleber beschichtet sind.

8. Fliese nach einem oder mehreren der vorhergehenden Ansprüche, dadurch gekennzeichnet, dass die Oberfläche profiliert, gewölbt oder ballig ausgeführt ist.

**Claims**

1. Tile, as a wall or floor slab, preferably with a flat surface, with a substructure connected to the surface and traversed by passages and with tongue-and-groove-like strips in the lateral zone of the wall or floor slab, characterised in that all four side walls of the substructure are provided with matching tongue-and-groove-like strips (1, 2) and in that there are in the substructure, initially closes at the time of delivery and capable of being broken open by means of intended breakage points, passages (3, 4, 7, 11) which extend transversely to the lateral edges of the tile, the passages being capable of being broken open as required when the tile is laid.

2. Tile according to claim 1, characterised in that the substructure is connected to and is one piece with the tile slab.

3. Tile component according to claim 1 or 2, characterised in that a part of the passages (7) is provided with upwardly open slots (10), these slots (10) being at least partially occluded by airdust filters.

4. Tile component according to claim 1 or 2, characterised in that the passages (3, 4, 7, 11) are substantially of equal height and extend at substantially the same distance from the tile surface (5).

5. Tile component according to claim 1 or 2, characterised in that strips of metal wool are at least partially laid into the downwardly open passages or in that a compressible tube of fabric woven from a heat conductive material is provided in the passages (4), at least partially, being introduced tightly into the tube guide passages (4).

6. Tile component according to claim 1, characterised in that the substructure is of stone material or vitrified clay, ceramic, hydraulically binding material or synthetic plastics material.

7. Tile component according to one or more of the preceding claims, characterised in that the side walls of the substructure are coated with permanently elastic adhesive.

8. Tile according to one or more of the preceding claims, characterised in that the surface is profiled, convex or bulbous.

## Revendications

1. Carreau de céramique, en tant que plaque de plancher ou de mur, ayant de préférence une surface plane, comportant une base traversée de canaux et reliée à la surface, et des rebords à emboîtement mâle et femelle dans la partie latérale de la plaque de plancher ou de mur, caractérisé en ce que les quatre parois latérales de la base sont munies de rebords (1, 2) à emboîtement mâle et femelle adaptés l'une à l'autre, et en ce que, dans la base vers le bas, sont prévus des canaux (3, 4, 7, 11) s'étendant parallèlement et transversalement aux côtés latéraux du carreau de céramique, fermés initialement dans l'état à la livraison et pouvant être ouverts au moyen de points destinés à la rupture, les canaux pouvant être ouverts selon le besoin lors de la pose du carreau.

2. Carreau de céramique selon la revendication 1, caractérisé en ce que la base est réalisée en une pièce avec la plaque de carreau.

3. Carreau de céramique selon la revendication 1 ou 2, caractérisé en ce qu'une partie des canaux (7) est munie de fentes (10) ouvertes vers le haut et ces fentes (10) sont, au moins en partie, fermées par un dépoussiéreur d'air.

4. Carreau de céramique selon la revendication 1 ou 2, caractérisé en ce que les canaux (3, 4, 7, 11) sont à peu près de même hauteur et s'étendent à environ la même distance de la surface (5) du carreau.

5. Carreau de céramique selon la revendication 1 ou 2, caractérisé en ce que, dans les canaux ouverts vers le bas, des bandes de laine métallique sont insérées, au moins en partie, ou un tuyau de tissu resserrable, en matériau conducteur de chaleur, est prévu dans les canaux (4), au moins en partie, qui s'insère étroitement dans les canaux (4) de guidage de tube.

6. Carreau de céramique selon la revendication 1, caractérisé en ce que le base est réalisée en grès cérame, en matériau céramique ducrissant hydrauliquement ou en matière synthétique.

7. Carreau de céramique selon une ou plusieurs des revendications précédentes, caractérisé en ce que les parois latérales de la base sont recouvertes de colle élastique de façon permanente.

8. Carreau de céramique selon une ou plusieurs des revendications précédentes, caractérisé en ce que la surface est profilée, cintrée ou bombée.

FIG. 1

011176 3

FIG. 2

FIG. 3

FIG. 4

3  4  11  4  3

13

15

011763

FIG. 5

0111763

FIG. 6

13

4

4

19

FIG. 7

FIG. 8

011763